# EUROPÄISCHE PATENTSCHRIFT

(11) **EP 0 813 171 B1**
(45) Veröffentlichungstag und Bekanntmachung des Hinweises auf die Patenterteilung: **07.02.2007**
(21) Anmeldenummer: 97109331.5
(22) Anmeldetag: 10.06.1997
(51) Int. Cl.: G07C 9/00, G07C 1/10

(54) **Mobile Benutzerschnittstelle**
Mobile user interface
Interface utilisateur mobile

(30) Priorität: 13.06.1996 DE 19623561
(43) Veröffentlichungstag der Anmeldung: 17.12.1997
(73) Patentinhaber: ROBERT BOSCH GMBH, 70442 Stuttgart (DE)
(72) Erfinder: Kolb, Stefan, Dr., 81925 München (DE)

(56) Entgegenhaltungen:
- WO-A-93/02430
- WO-A-93/09621
- DE-A- 3 922 347
- DE-A- 4 311 385
- DE-A- 4 439 593
- GB-A- 2 181 582
- US-A- 4 851 654

## Beschreibung

### Stand der Technik

Die Erfindung geht aus von einer elektronischen Karte nach der Gattung des Hauptanspruchs. Es sind bereits elektronische Karten, sogenannte Chipkarten, bekannt. In solchen Karten, die meistens ein handliches Scheckkartenformat aufweisen, werden Prozessoren und Speichereinheiten integriert eingebaut. Mit solchen Chipkarten ist die Zutrittskontrolle des Benutzers bei Betreten eines Gebäudes oder Betriebsgeländes möglich. Auch eine Zeiterfassung für das Arbeitszeitkonto bei gleitenden Arbeitszeiten und z.B. der bargeldlose Einkauf ist mit einer solchen Chipkarte möglich.
Zur Benutzung dieser Chipkarten dienen fest installierte Terminals. Der Benutzer muß seine Wünsche über eine am Terminal befindliche Tastatur eingeben. Eine Überprüfung aktueller Kontostände, oder aber des Arbeitszeitkontos ist nur an einem Terminal oder über Zusatzgeräte möglich jedoch nicht über ein Display auf der Karte selbst.

Bekannt sind im Bereich der Zutrittskontrollsysteme auch Näherungsleseverfahren die für viele Anwendungsfälle eine einfache Zutrittsverifikation erlauben. Durch den Erfassungsbereich von einigen Zentimetern bis zu mehreren Metern wird eine mobile und berührungslose Prüfung der Zutrittsberechtigung möglich. Der Benutzer durchquert das Sende/Empfangsfeld und ruft so eine Änderung in dem stationären elektromagnetischen Feld hervor. Der Sender aktiviert die Antenne der elektronischen Karte, die daraufhin in einem Übertragungsdialog mit der Zentraleinheit eintritt (Siehe z.B. US-A-4 851 654). Eine Kontrolle der Zugangsberechtigung ist so einfach. Möchte man aber eine Zeiterfassung mit einem berührungslosen Nährungsleseverfahren kombinieren, ist es problematisch den eindeutigen Nachweis des Signals einer Karte zum Benutzer und zu der Art der Buchung zu führen. Die Buchungen der Zeiterfassung, also z. B. eine "Kommen-" oder "Gehen"-Buchung können nicht eindeutig einem Benutzer nachgewiesen werden. Zudem hat der Benutzer keine Kontrolle über die geleisteten Buchungen, sowie über ein eventuelles Gleitzeitguthaben.

### Vorteile der Erfindung

Diese Aufgabe wird durch die Merkmale des Anspruches 1 gelöst.

Die erfindungsgemäße Benutzerschnittstelle in Form einer elektronischen Chipkarte für ein Näherungsleseverfahren mit den kennzeichnenden Merkmalen des Hauptanspruchs hat demgegenüber den Vorteil, daß der Benutzer über die Bedienmöglichkeiten der elektronischen Karte Befehle ausgeben kann. Dadurch werden die Vorteile des berührungslosen Nährungsleseverfahrens mit einer eindeutigen Zuordnung der Karte zu einer Person und zu der auszuführenden Aufgabe verbunden.

Durch die in den Unteransprüchen aufgeführten Maßnahmen sind vorteilhafte Weiterbildungen der im Hauptanspruch angegebenen elektronischen Karte möglich.

Besonders vorteilhaft ist, daß die Bedienung der Karte über eine Tastatur erfolgt, wobei gewisse Befehle auf Funktionstasten fest belegt sind.

Eine weitere vorteilhafte Ausbildung verwendet eine Spracheingabe über ein kleines, in der Karte integriertes Mikrofon.
Um die Zugangsberechtigung des Benutzers sicherzustellen, tritt die Karte in Kommunikation mit dem Empfangsgerät, und es wird ein Code abgefragt. Dabei ist es möglich, diesen Code in Form einer persönlichen Codeziffer einzugeben.
Eine weitere vorteilhafte Ausbildung ist eine Spracherkennung, die eine eindeutige Zuordnung des Benutzers zu seiner Karte ermöglicht. Vorteilhafterweise können in der elektronischen Karte eine Vielzahl an Funktionen und Aufgaben gespeichert werden.
Vorteilhafterweise erfolgt die Kommunikation über eine Empfangs/Sendespule im Transponderbetrieb.

### Zeichnung

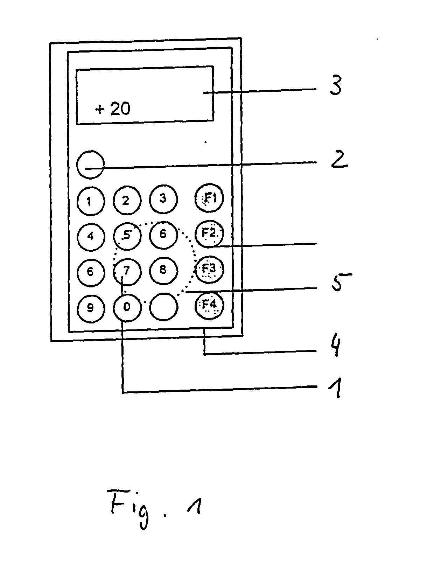

Ein Ausführungsbeispiel der Erfindung ist in der Zeichnung dargestellt und in der nachfolgenden Beschreibung näher erläutert. Figur 1 zeigt eine erfindungsgemäße elektronische Karte für die Zeiterfassung.

### Beschreibung des Ausführungsbeispiels

Für eine Zutrittskontrolle sowie eine Zeiterfassung wird eine Karte nach Figur 1 ausgegeben. Die Karte besitzt ein Tastaturfeld 1, sowie Funktionstasten F1 bis F4. Zusätzlich zu der Tastatur wird ein Mikrofon 2 für die Spracheingabe eingebaut. Die Karte weist zudem ein Display 3 auf, das aus baulichen Erfordernissen heraus ein Flüssigkristalldisplay ist. Innerhalb der Karte befindet sich die Empfangsspule 4, über die der Empfang und das Senden von Daten erfolgt. Zusätzlich muß eine Batterie 5 vorhanden sein, die für den Datenerhalt und für die Versorgung der Anzeige notwendig ist.

Wird an einen Mitarbeiter eine solche elektronische Karte als Zutrittsberechtigung vergeben, ist im Speicher bereits die Zutrittserlaubnis hinterlegt. In einem ersten Schritt muß der neue Besitzer einen persönlichen Code eingeben. Dieser persönliche Code wird zusammen mit der Zutrittserlaubnis in einem zentralen System hinterlegt. Betritt der Mitarbeiter mit seiner Zutrittskarte den Lesebereich des Näherungslesegerätes, wird die Empfangsspule der elektronischen Karte durch Beeinflussung des elektromagnetischen Feldes angeregt. Die Spule arbeitet im Transponderbetrieb, was bedeutet, daß das Sendesignal die Karte aktiviert. Um sich auszuweisen gibt der Mitarbeiter auf seiner elektronischen Karte seinen persönlichen Code ein, der von der Spule an die Empfangsstation weitergegeben wird. Zusätzlich wird er über die Funktionstaste, z. B. F1=Kommen, seinen Buchungswunsch mitteilen. Die zentrale Empfangseinheit registriert, daß der Mitarbeiter berechtigt ist die Betriebsstätte zu betreten, sowie seinen Buchungswunsch für sein persönliches Arbeitszeitkonto. In einem weiteren Schritt werden die Daten des aktuellen Arbeitszeitkontos an die elektronische Karte übertragen. Diese Daten werden in der Karte gespeichert und sind für den Mitarbeiter dann jederzeit über das Display ablesbar.

In einer weiteren Ausführungsform erfolgt die Identifikation des Benutzers durch eine Sprachverifizierung. Hier werden die kennzeichnenden Stimmuster des Benutzers gespeichert und als Zugangsberechtigung in der Zentrale hinterlegt. Eine in der Karte integrierte Spracherkennung kann eine Vielzahl von Systembefehlen für die Zeiterfassung, wie "Kommen, Gehen, Dienstgang," usw. erkennen. Für den Benutzer bietet dies den Vorteil, daß das berührungslose Näherungsleseverfahren auch in der Veranlassung von Befehlsfunktionen ohne Benutzung der Hände funktioniert und der Benutzer sich nur im Näherungsbereich der Empfangsstation befinden muß. Da das Verfahren berührungslos arbeitet, treten die bekannten Probleme von Verschmutzung des Lese/Schreibbkopfs am Terminal nicht auf. Durch die Empfangsstationen mit dem Näherungsleseverfahren sind kostengünstigere Lösungen für die Zeiterfassung möglich. Zudem erlaubt das System, eine kontinuierliche Abfrage des aktuellen Arbeitszeitkontos. Besonders vorteilhaft ist es, daß durch die Integration von Bedienungselementen auf den elektronischen Karten weitere Funktionen für den Benutzer angeboten werden können. So ist die Integration einer Taschenrechnerfunktion denkbar. Als weitere integrierbare Funktion ist der Abruf von Datum, der Uhrzeit oder aber Weg- und Termin-Funktionen möglich. Durch das Vorhandensein des Speicherbereichs können auch kleinere Dateien, z. B. Telefonnummern, die über die Sendestation an die Karte gegeben werden, gespeichert werden. Wenn man eine Spracheingabe für Systembefehle vorsieht, werden auch weitere Spracheingaben möglich. Dabei sind Befehlssätze für z. B. das Scharfschalten einer Gefahrenmeldeanlage oder aber Befehlssätze für verschiedene Notfallsituationen denkbar. Des weiteren kann die elektronische Karte als aufladbare elektronische Börse für bargeldlosen Zahlungsverkehr dienen.

Bei positiver Identifikation werden Öffnungsmechanismen von Türen und Schranken angesteuert, bei mehrmaliger fehlerhaften Identifikation oder Manipulation können Alarmanlagen ausgelöst und weitere Funktionen veranlaßt werden.

## Patentansprüche

1. Mobile Benutzerschnittstelle für Zutrittskontrolle und Zeiterfassung in Form einer elektronischen Chipkarte mit Prozessor- und Speichereinheit, die dafür geeignet ist, in einem berührungsloses Näherungsleseverfahren mit einer stationären Empfangs/Sendestation über eine Spule in Verbindung zu treten, wobei der Benutzer über die auf der Chipkarte vorhandenen Bedieneinrichtungen Befehle an die stationäre Empfangsstation ausgibt,
**dadurch gekennzeichnet, dass**
eine Benutzerberechtigung über die Eingabe eines Codes über die Bedieneinrichtungen erfolgt und der eingegebene Code von der Spule an die Empfangs/Sendestation weitergegeben wird.

2. Mobile Benutzerschnittstelle nach Anspruch 1, **dadurch gekennzeichnet, daß** die Bedieneinrichtungen aus einer Tastatur und/oder einer Spracheingabe bestehen.

3. Mobile Benutzerschnittstelle nach Anspruch 1 und 2, **dadurch gekennzeichnet, daß** die Chipkarte ein Display aufweist.

4. Mobile Benutzerschnittstelle nach Anspruch 1 bis 3, **dadurch gekennzeichnet, daß** die Chipkarte weitere Funktionen wie Notruf, elektronische Geldbörse, Taschenrechner, Kalender usw. enthalten kann.

5. Mobile Benutzerschnittstelle nach Anspruch 1 bis 4, **dadurch gekennzeichnet, daß** der Code ein Zahlencode ist.

6. Mobile Benutzerschnittstelle nach Anspruch 1 bis 4, **dadurch gekennzeichnet, daß** der Code eine Stimmerkennung ist.

## Claims

1. Mobile user interface for access control and time recording in the form of an electronic smart card having a processor and memory unit, which is suitable for being connected via a coil to a stationary receiving/transmitting station using a non-contacting proximity reading method, with the user outputting commands to the stationary receiving station via the control devices provided on the smart card
**characterized in that**
a user authorization is provided by entering a code via the control devices, and the entered code is passed on from the coil to the receiving/transmitting station.

2. Mobile user interface according to Claim 1, **characterized in that** the control devices comprise a keypad and/or a speech input.

3. Mobile user interface according to Claims 1 and 2, **characterized in that** the smart card has a display.

4. Mobile user interface according to Claims 1 to 3, **characterized in that** the smart card may contain further functions, such as emergency call, electronic purse, pocket computer, calendar, etc.

5. Mobile user interface according to Claims 1 to 4, **characterized in that** the code is a numerical code.

6. Mobile user interface according to Claims 1 to 4, **characterized in that** the code is voice recognition.

## Revendications

1. Interface utilisateur mobile pour le contrôle d'accès et la détection de temps, en forme de carte à puce électronique munie d'une unité de processeur et de mémoire apte à entrer en contact, par un procédé de lecture d'approche sans contact, avec une station de réception/d'émission stationnaire par l'intermédiaire d'une bobine, l'utilisateur émettant des instructions à la station de réception à l'aide des dispositifs de commande prévus sur la carte à puce,
**caractérisée en ce qu'**
une autorisation d'utilisateur est attribuée par l'introduction d'un code dans les dispositifs de commande, et le code introduit est transmis par la bobine à la station de réception/d'émission.

2. Interface utilisateur mobile selon la revendication 1,
**caractérisée en ce que**
les dispositifs de commande sont un clavier et/ou une introduction vocale.

3. Interface utilisateur mobile selon les revendications 1 et 2,
**caractérisée en ce que**
la carte à puce présente un affichage.

4. Interface utilisateur mobile selon les revendications 1 à 3,
**caractérisée en ce que**
la carte à puce peut contenir d'autres fonctions telles qu'un appel d'urgence, un porte-monnaie électronique, un calculateur de poche, un calendrier, etc.

5. Interface utilisateur mobile selon les revendications 1 à 4,
**caractérisée en ce que**
le code est un code numérique.

6. Interface utilisateur mobile selon les revendications 1 à 4,
**caractérisée en ce que**
le code est une identification vocale.
